# EUROPÄISCHE PATENTSCHRIFT

(11) **EP 1 737 720 B1**
(45) Veröffentlichungstag und Bekanntmachung des Hinweises auf die Patenterteilung: **03.06.2009**
(21) Anmeldenummer: 05740725.6
(22) Anmeldetag: 22.04.2005
(51) Int. Cl.: B62D 1/187, B62D 1/181, B62D 1/18

(54) **SICHERHEITSLENKSÄULE FÜR EIN KRAFTFAHRZEUG**
SAFETY STEERING COLUMN FOR A MOTOR VEHICLE
COLONNE DE DIRECTION DE SECURITE POUR AUTOMOBILE

(30) Priorität: 23.04.2004 DE 102004020048
(43) Veröffentlichungstag der Anmeldung: 03.01.2007
(73) Patentinhaber: Daimler AG, 70327 Stuttgart (DE)
(72) Erfinder: BECHTEL, Travis, D., Goodrich, MI 48438 (US); BOHLEN, Jens, 21376 Eyendorf (DE); BORN, Christian, 22589 Hamburg (DE); BROWN, Markus, Armada, MI 48005 (US); DUNCAN, Scott, D., Flint, MI 48506 (US); EGGERS, Fred, 21614 Buxtehude (DE); HEBENSTREIT, Axel, 70193 Stuttgart (DE); KNOLL, Karl-Heinz, 71384 Weinstadt (DE); VON EY, Peter, 22605 Hamburg (DE)
(74) Vertreter: JENSEN & SON
(86) Internationale Anmeldenummer: PCT/EP2005/004324
(87) Internationale Veröffentlichungsnummer: WO 2005/102819

(56) Entgegenhaltungen:
- EP-A- 0 911 244
- DE-A1- 10 130 908
- DE-C1- 10 203 917
- PEITSMEIER K ET AL: "DIE LENKANLAGE DER NEUEN MERCEDES-BENZ S-KLASSE" ATZ AUTOMOBILTECHNISCHE ZEITSCHRIFT, FRANCKH., STUTTGART, DE, Bd. 93, Nr. 7 / 8, 1. Juli 1991 (1991-07-01), Seiten 416-422,424, XP000267528 ISSN: 0001-2785

## Beschreibung

Die vorliegende Erfindung betrifft eine Sicherheitslenksäule für ein Kraftfahrzeug, gemäß Oberbegriff des Anspruchs 1.

Sicherheitslenksäulen sind im heutigen Kraftfahrzeugbau weit verbreitet und schützen einen Fahrer des Kraftfahrzeugs bei einem Unfall, indem sie aktiv oder passiv aus einem Gefahrenraum des Fahrzeugs heraus bewegt werden. Bei einer aktiven Sicherheitslenksäule wird diese Bewegung selbsttätig ausgeführt, so dass es im Normalfall nicht zu einem Aufprall des Fahrers auf eine an einem oberen Ende der Lenksäule angeordnete Lenkhandhabe kommt. Bei einer passiven Sicherheitslenksäule kann diese beim Überschreiten einer vordefinierten Kraft aus dem Gefahrenbereich bewegt werden, beispielsweise indem ein oberes Lenksäulenteil gegen ein unteres Lenksäulenteil axial verschiebbar gelagert ist.

Aus der DE 101 30 908 A1 und auch aus der DE 10203917 C1 ist eine Sicherheitslenksäule für ein Kraftfahrzeug bekannt. Diese weist eine teleskopierbare Lenkspindel auf, welche aus einem oberen und einem unteren Spindelteil besteht und in einem Mantelrohr mittels eines oberen Lagers, welches das obere Spindelteil am Mantelrohr abstützt, und eines unteren Lagers, welches das untere Spindelteil am Mantelrohr abstützt, drehbar gelagert ist. Ebenso wie die Lenkspindel ist auch das Mantelrohr teleskopierbar ausgebildet und weist ein lenkradnahes oberes Rohrteil und ein lenkradfernes unteres Rohrteil auf. Sowohl die Spindelteile als auch die Rohrteile des Mantelrohrs sind ineinander gesteckt und oberhalb einer axialen Auslösekraft relativ zu einander verschiebbar. Das untere Lager ist dabei als Festlager ausgebildet, während das obere Lager als Loslager ausgebildet ist. Eine Verschiebung der beiden Spindelteile beziehungsweise der beiden Rohrteile erfolgt grundsätzlich erst beim Überschreiten der axialen Auslösekraft, das heißt beispielsweise im Crashfall. Um die Lenksäule axial zu verstellen und damit an individuelle Bedürfnisse eines Fahrers anzupassen, wird diese komplett, das heißt mit oberem und unterem Spindel- beziehungsweise Mantelrohr, entlang einer Führung verstellt.

Aus der DE 102 51 764 A1 geht eine elektrisch längen- und höhenverstellbare Sicherheitslenksäule der hier angesprochenen Art hervor, die eine teleskopierbare Lenkspindel mit einem lenkradnahen oberen Spindelteil und einem lenkradfernen unteren Spindelteil aufweist. Die Lenkspindel ist in einem Mantelrohr drehbar gelagert, welches ein lenkradnahes oberes Rohrteil und ein lenkradfernes unteres Rohrteil aufweist. Das untere Rohrteil ist um eine erste Achse schwenkbar an einer fahrzeugfest anordenbaren Konsole gelagert. Ferner ist eine zur Höhenverstellung des Mantelrohrs dienende Verstellvorrichtung vorgesehen, die ein an der Konsole um eine zweite Achse schwenkbar gelagertes Stellelement aufweist, welches mit einem am oberen Rohrteil um eine Achse schwenkbar gelagerten Umlenkbügel gelenkig gekoppelt ist. Die Funktionsweise der Verstellvorrichtung ist ähnlich einem Kniehebel und soll unter anderem aus Komfortgründen eine spielfreie Höhenverstellung der Sicherheitslenksäule gewährleisten. Die Spielfreiheit dieser Hebelanordnung ist bei motorisch, insbesondere mittels Spindelantriebe verstellbaren Sicherheitslenksäulen deshalb so wichtig, weil auf separate Klemmmittel zur Fixierung der Sicherheitslenksäule in einer gewünschten Position, wie sie bei manuell verstellbaren Sicherheitslenksäule eingesetzt werden, verzichtet wird.

Es ist Aufgabe der Erfindung, eine Sicherheitslenksäule der eingangs genannten Art zu schaffen, die einen einfachen und kostengünstigen Aufbau bei einer zumindest annährenden Spielfreiheit der Verstellvorrichtung aufweist.

Zur Lösung_der_Aufgabe wird eine Sicherheitslenksäule mit den Merkmalen des Anspruchs 1 vorgeschlagen. Die Sicherheitslenksäule umfasst eine teleskopierbare Lenkspindel, die ein lenkradnahes oberes Spindelteil und ein lenkradfernes unteres Spindelteil aufweist und in einem Mantelrohr drehbar gelagert ist. Das Mantelrohr ist ebenfalls teleskopierbar ausgestaltet und weist ein lenkradnahes oberes Rohrteil und ein lenkradfernes unteres Rohrteil auf. Das untere Rohrteil ist um eine erste Achse schwenkbar an einer fahrzeugfest anordenbaren Konsole gelagert. Nach einer ersten Ausführungsvariante ist vorgesehen, dass das untere Rohrteil axial verstellbar im oberen Rohrteil geführt ist. Nach einer zweiten Ausführungsvariante ist vorgesehen, dass das obere Rohrteil axial verstellbar im unteren Rohrteil geführt ist. Die Sicherheitslenksäule umfasst ferner eine zur Höhenverstellung des Mantelrohrs dienende, ein an der Konsole um eine zweite Achse schwenkbar gelagertes Stellelement aufweisende Verstellvorrichtung. Die Sicherheitslenksäule zeichnet sich dadurch aus, dass das Stellelement über ein in axialer Richtung relativ gegenüber dem Mantelrohr translatorisch verstellbares Kraftübertragungselement mit dem Mantelrohr gekoppelt ist. Aufgrund der erfindungsgemäßen Ausgestaltung weist die Verstellvorrichtung ein nur sehr geringes, jedoch noch ausreichendes Spiel auf, um die durch die unterschiedlichen Bewegungsbahnen des Mantelrohrs und des Kraftübertragungselements erforderliche Relativbewegung zwischen diesen Baugruppen/-teilen bei einer Höhenverstellung der Sicherheitslenksäule zu ermöglichen.

Bei einer besonders vorteilhaften Ausführungsform der Sicherheitslenksäule ist vorgesehen, dass das Kraftübertragungselement in einer außen am Mantelrohr vorgesehenen Führung geführt ist. Die Führung kann je nach Ausführungsform der Sicherheitslenksäule sowohl am oberen Rohrteil vorgesehen sein als auch alternativ am unteren Rohrteil. Dabei kann das Kraftübertragungselement beispielsweise ähnlich einem Kulissenstein ausgebildet sein, der in einer schlitzförmigen Ausnehmung geführt ist. Die Ausführungsform mit dem in einer außen am Mantelrohr angeordneten Führung geführten Kraftübertragungselement weist einen nur geringen Bauraumbedarf auf. Des Weiteren ist eine praktisch spielfreie Lagerung beziehungsweise Führung des Kraftübertragungselements und des Stellelements möglich, wodurch die Steifigkeit der Lenksäule bei gleichzeitiger Reduzierung der Vibrationsanfälligkeit erhöht werden kann.

Besonders bevorzugt wird eine Ausführungsform der Sicherheitslenksäule, bei der ein erster Stellantrieb zum Verschwenken des Stellelements um die erste Achse und/oder ein zweiter Stellantrieb zur Längenverstellung der Sicherheitslenksäule vorgesehen sind/ist. Selbstverständlich ist der Aufbau der erfindungsgemäßen Sicherheitslenksäule auch dazu geeignet, bei manuell verstellbaren Lenksäulen eingesetzt zu werden, bei welchen eine Längen- und Höhenverstellung nach Lösen einer Klemmeinrichtung manuell durch den Fahrer erfolgt, indem dieser die Lenksäule mit einer Zug- oder Druckkraft beaufschlagt oder diese nach unten oder nach oben drückt. Damit ist ein hoher Gleichteileinsatz bei den motorisch/elektrisch und mechanisch in Länge und Höhe verstellbaren Lenksäulen möglich, so dass ein einheitliches Crashprinzip realisierbar ist.

Besonders bevorzugt wird auch ein zweites Ausführungsbeispiel der Sicherheitslenksäule, bei der das das Kraftübertragungselement von einem äußeren Rohrteil gebildet ist, in dem das das obere Rohrteil axial verstellbar geführt ist. Bei dieser Ausführungsvariante dient das obere Rohrteil als Führung für das äußere Rohrteil, so dass ein besonders einfacher Aufbau der Sicherheitslenksäule realisierbar ist. Auch bei dem zweiten Ausführungsbeispiel der Sicherheitslenksäule ist es möglich, dass das obere Rohrteil im unteren Rohrteil axial verstellbar geführt ist oder alternativ dass das untere Rohrteil im oberen Rohrteil axial verstellbar geführt ist. Durch die erfindungsgemäße teleskopierbare Lenksäule wird im Crashfall ein ausreichender Deformationsweg bereitgestellt, wodurch die Fahrzeugsicherheit erhöht werden kann. Zugleich wird mit den drei ineinander gesteckten Mantelrohrteilen bei geringem Bauraumbedarf eine Komfortverstellung ermöglicht, welche ein einfaches Anpassen einer Position der Lenkhandhabe an physische Erfordernisse des jeweiligen Fahrers erlaubt. Darüber hinaus wird durch den Aufbau mit insgesamt drei Mantelrohrteilen sowie deren spielfreie Lagerung ineinander, die Steifigkeit der Lenksäule erhöht, wodurch der Fahrkomfort, zum Beispiel durch reduzierte Vibrationsanfälligkeit, gesteigert werden kann.

Gemäß einer bevorzugten Ausführungsform der erfindungsgemäßen Sicherheitslenksäule ist das äußere Rohrteil über einen Schlitten an der Konsole gelagert und zwischen dem äußeren Rohrteil und dem Schlitten das Stellelement angeordnet, welches am Schlitten um eine zweite Achse und am äußeren Rohrteil um eine dritte Achse drehbar gelagert ist. Der Schlitten ist bis zur Überwindung vom Missbrauchskräften lagefixiert an der Konsole angeordnet und kann entlang seiner Schlittenführung beim Überschreiten der Misabrauchskräfte, also beispielsweise bei einem Fahrzeugcrash, verstellt werden, wodurch sich die Sicherheitslenksäule teleskopartig ineinander schiebt und die Lenkhandhabe aus dem Gefahrenbereich des Fahrers gezogen wird. Das Stellelement, welches Teil der Höhenverstellung der Sicherheitslenksäule ist, gewährleistet durch seinen steifen Aufbau eine exakte Positionierung und Lagefixierung der Sicherheitslenksäule in der gewünschten Einstellposition.

Gemäß einer vorteilhaften Weiterbildung umgreift das Stellelement das äußere Rohrteil U-förmig, wobei beide Schenkel des U-förmigen Stellelementes einen L-förmigen abgewinkelten Endbereich aufweisen, welcher jeweils von der zweiten und der dritten Achse durchdrungen wird. Die L-förmigen Endbereiche stehen dabei im Wesentlichen orthogonal zur U-Ebene ab und erhöhen dadurch zusätzlich die Steifigkeit des Stellelements. Das Stellelement kann beispielsweise aus Kunststoff oder Metall ausgebildet sein und dadurch kostengünstig und maßgenau hergestellt werden.

Zweckmäßig ist am Schlitten ein erster Stellantrieb befestigt, der über eine Spindel einen am Stellelement drehfest angeordneten Stellarm verstellt und dadurch die Sicherheitslenksäule bezüglich der ersten Achse verschwenkt. Spindelantriebe sind bewährte und exakte Justiervorrichtungen, so dass der erste Stellantrieb eine exakte Anpassung der Höhe der Lenkhandhabe durch eine Drehung/ein Verschwenken der Sicherheitslenksäule um die erste Achse ermöglicht. Darüber hinaus ist ein derartiger Spindelantrieb einfach und kostengünstig herzustellen und wartungsarm im Betrieb. Je nach Höhe der Gewindegänge an der Spindel lässt sich die Höhe der Sicherheitslenksäule beziehungsweise der Lenkhandhabe auch in kleinsten Schritten exakt verstellen.

Gemäß einer weiteren vorteilhaften Ausführungsform der Sicherheitslenksäule ist am äußeren Rohrteil ein zweiter Stellantrieb befestigt, der das obere Rohrteil bezüglich des äußeren Rohrteils axial verstellt. Der zweite Stellantrieb kann dabei ebenfalls über einen Spindelantrieb mit dem oberen Rohrteil wirkungsverbunden sein, so dass auch eine exakte Längsverstellung der Sicherheitslenksäule problemlos möglich ist. Denkbar ist hierbei auch, dass der erste und der zweite Stellantrieb eine gleichartige oder vergleichbare Bauweise aufweisen, wodurch eine Reduktion der Teilevielfalt und damit eine Senkung der Produktionskosten erreicht werden kann.

Entsprechend einer besonders bevorzugten Ausführungsform der Erfindung weist der erste und/oder der zweite Stellantrieb einen Elektromotor auf. Elektromotoren sind in nahezu beliebiger Ausführungsform denkbar und genau an jeweilige Erfordernisse anpassbar. Darüber hinaus ermöglichen Elektromotoren einen wartungsarmen Betrieb, sind kostengünstig herzustellen und erreichen aufgrund der heutigen hohen Fertigungsqualität eine lange Lebensdauer.

Bei einer weiteren besonders vorteilhaften Ausführungsform der Sicherheitslenksäule ist am äußeren Rohrteil ein Druckstück vorgesehen, welches das untere Rohrteil radial gegen das obere Rohrteil und somit unteres und oberes Rohrteil radial gegen das äußere Rohrteil andrückt. Das Druckstück, welches beispielsweise als Federelement oder als Schraubelement ausgebildet ist, gewährleistet eine spielfreie Lagerung der einzelnen Rohrteile ineinander und steift gleichzeitig die Sicherheitslenksäule aus, wodurch insgesamt ein verbesserter Fahrkomfort erreicht wird.

Zusammenfassend bleibt festzuhalten, dass alle Ausführungsbeispiele der Sicherheitslenksäule auf dem allgemeinen Gedanken beruhen, bei einer Sicherheitslenksäule für ein Kraftfahrzeug mit einer teleskopierbaren Lenkspindel, welche in einem teleskopierbaren Mantelrohr gelagert ist, neben einer vereinfachten Teleskopierbarkeit gleichzeitig eine große axiale Crashverformung zu ermöglichen.

Weitere Vorteile, Merkmale und Einzelheiten der Erfindung ergeben sich aus der nachfolgenden Beschreibung, in der unter Bezugnahme auf die Zeichnung mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Gleiche Bezugszeichen beziehen sich auf gleiche oder funktional gleiche oder ähnliche Bauteile.

Dabei zeigen:
- Fig.1: Eine Schrägansicht auf ein erstes Ausführungsbeispiel der erfindungsgemäßen Sicherheitslenksäule,
- Fig. 2: einen Längsschnitt durch die erfindungsgemäße Sicherheitslenksäule gemäß Figur 1,
- Fig. 3: eine Seitenansicht bei nach unten verschwenkter Lenkspindel,
- Fig. 4: eine Darstellung wie in Fig. 3, jedoch bei nach oben verschwenkter Lenkspindel,
- Fig. 5: eine Darstellung wie in Fig. 4, jedoch mit parallel zur Konsole angeordneter Lenkspindel und axial ausgefahrenem oberen Rohrteil,
- Fig. 6: eine Darstellung wie in Fig. 5, jedoch in einer Crashstellung, und
- Fig. 7: einen Ausschnitt eines zweiten Ausführungsbeispiels der_Sicherheitslenksäule in perspektivischer Darstellung.

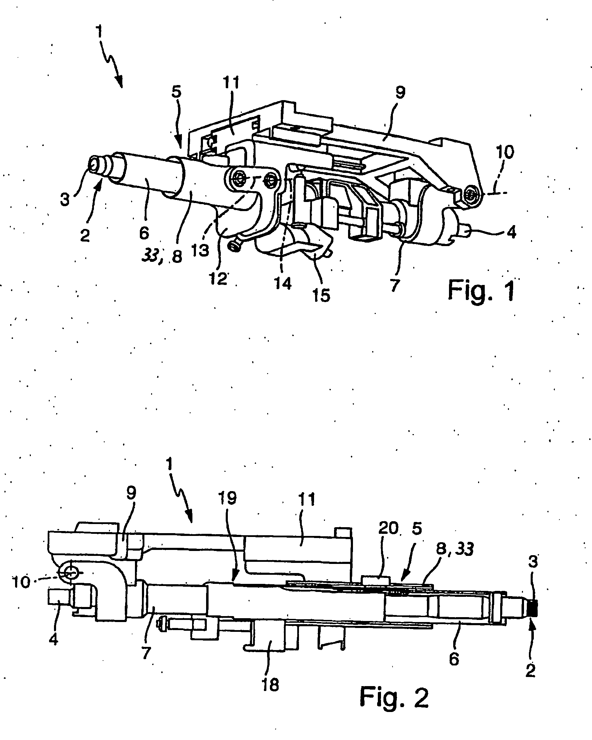

Entsprechend Figur 1 weist eine Sicherheitslenksäule 1 eine teleskopierbare Lenkspindel 2 auf, die aus einem lenkradnahen oberen Spindelteil 3 und aus einem lenkradfernen unteren Spindelteil 4 besteht und in einem insgesamt dreiteiligen Mantelrohr 5 drehbar gelagert ist. Das Mantelrohr 5 ist ebenfalls teleskopierbar ausgestaltet und weist ein lenkradnahes oberes Rohrteil 6, ein lenkradfernes unteres Rohrteil 7 sowie ein äußeres Rohrteil 8 auf. Das äußere Rohrteil 8 bildet ein Kraftübertragungselement 33 bei der Höhenverstellung der Sicherheitslenksäule 1 aus, worauf im Folgenden noch näher eingegangen wird.

Die Sicherheitslenksäule 1 ist üblicherweise in einem Kraftfahrzeug eingebaut und an einer fahrzeugfesten Konsole 9 über eine Führung gelagert. Zur Höhenverstellung der Sicherheitslenksäule 1 sowie einer daran am Ende des oberen Spindelteils 3 angeordneten, nicht dargestellten Lenkhandhabe, ist das untere Rohrteil 7 um eine erste Achse 10 schwenkbar an der fahrzeugfesten Konsole 9 gelagert. Gleichzeitig ist das untere Rohrteil 7 axial verstellbar im oberen Rohrteil 6 geführt (vgl. Figur 2), wogegen das obere Rohrteil 6 axial verstellbar im äußeren Rohrteil 8 geführt und gelagert ist. Das äußere Rohrteil 8 ist wiederum axial verstellbar an der Konsole 9 gelagert.

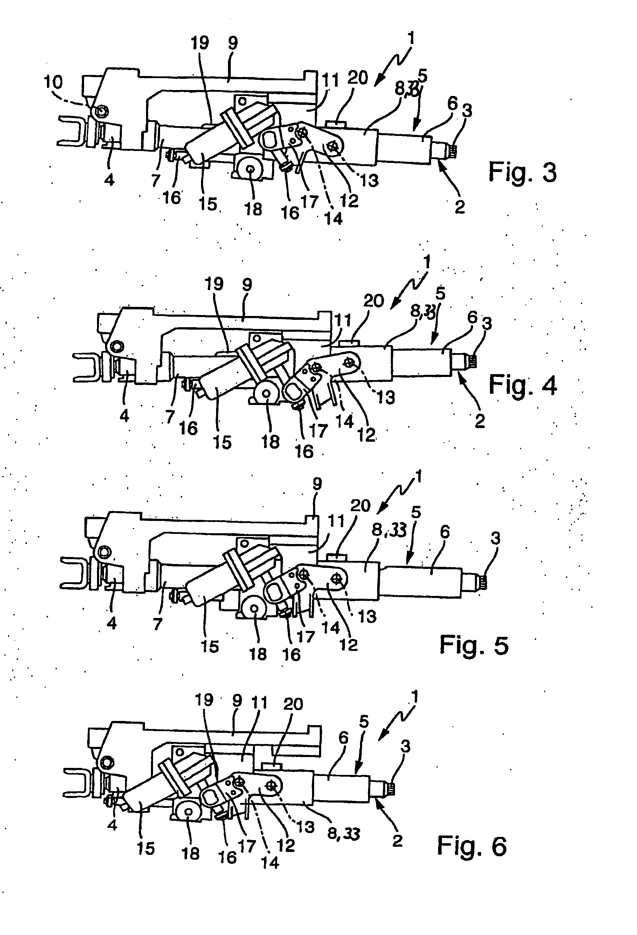

Die Lagerung des äußeren Rohrteiles 8 an der fahrzeugfesten Konsole 9 erfolgt über einen Schlitten 11, welcher in einer Komfortstellung lagefixiert an der fahrzeugfesten Konsole 9 angeordnet ist und bei Überschreiten von Missbrauchskräften, beispielsweise bei einem Fahrzeugcrash, in eine Crashstellung überführt wird, in welcher er entlang einer nicht näher bezeichneten Schlittenführung parallel zur Achse der Sicherheitslenksäule 1 verstellt werden kann (vgl. Figur 6).

Zwischen dem äußeren Rohrteil 8 und dem Schlitten 11 ist ein Stellelement 12 angeordnet, welches am Schlitten 11 um eine zweite Achse 14 und am äußeren Rohrteil 8 um eine dritte Achse 13 drehbar gelagert ist. Dabei verlaufen sowohl die erste Achse 10, als auch die zweite Achse 14 und die dritte Achse 13 parallel zueinander. Das Stellelement 12 ist Teil einer Verstellvorrichtung zur Höhenverstellung des Mantelrohrs 5, worauf im Folgenden noch näher eingegangen wird.

Das Stellelement 12 ist U-förmig ausgebildet und umgreift mit seinen beiden U-Schenkeln das äußere Rohrteil 8. Gemäß Figur 1 weisen beide Schenkel des U-förmigen Stellelementes 12 einen L-förmig abgewinkelten Endbereich auf, welcher jeweils von der zweiten Achse 14 und der dritten Achse 13 durchdrungen wird.

Gemäß den Figuren 3 bis 6 ist am Schlitten 11 ein erster Stellantrieb 15 befestigt, der über eine Spindel 16 einen am Stellelement 12 drehfest angeordneten Stellarm 17 verstellt und dadurch die Sicherheitslenksäule 1 bezüglich der ersten Achse 10 verschwenkt. Ein dem Stellelement 12 abgewandtes Ende des Stellarmes 17 ist dabei mit der Spindel 16 derart antriebsverbunden, dass eine Drehung der Spindel 16 eine axiale Verstellung des Stellarmes 17 entlang der Spindelachse bewirkt.

Die Kraftübertragung vom ersten Stellantrieb 15 zum Mantelrohr 5 zum Zwecke der Höhenverstellung der Sicherheitslenksäule 1, also zum Verschwenken des Mantelrohrs 5 um die erste Achse 10 erfolgt über ein Verschwenken des Stellelements 12 um die zweite Achse 14, was zu einer Verlagerung des vom äußeren Rohrteil 8 gebildeten Kraftübertragungselements 33, in welchem das obere Rohrteil 6 mit vorzugsweise nur geringem Spiel geführt ist, führt. Dabei beaufschlagt das Kraftübertragungselement 33 das obere Rohrteil 6 mit einer Stellkraft, die zum Verschwenken des Mantelrohrs 5 um die Achse 10 führt. Das rohrförmige Kraftübertragungselement 33 ermöglicht dabei eine Relativbewegung des oberen Rohrteils 6 in Richtung der Mantelrohr-Längsmittelachse gegenüber dem Kraftübertragungselement 33, was erforderlich ist, weil das untere und obere Rohrteil 7 und 6 um die erste Achse 10 schwenken, während das äußere Rohrteil 8/das Kraftübertragungselement 33 um die zweite Achse 14 schwenkt. Aufgrund der Relativbewegung des oberen Rohrteils 6 gegenüber dem Kraftübertragungselement 33 wandert auch der Kraftangriffspunkt des Kraftübertragungselements 33 am Mantelrohr in axialer Richtung in Bezug auf einen Bezugspunkt am Mantelrohr hin und her. Im Zusammenhang mit der vorliegenden Erfindung wird unter dem Begriff "Kraftangriffspunkt" selbstverständlich auch eine Anlagefläche/ein Kontaktbereich zwischen dem Kraftübertragungselement und dem Mantelrohr verstanden.

Das radiale Spiel zwischen dem äußeren Rohrteil 8/dem Kraftübertragungselement 33 und dem darin geführten oberen Rohrteil 6 ist vorzugsweise nur sehr gering, wodurch eine Lenksäule mit hoher Steifigkeit realisierbar ist. Die Sicherheitslenksäule 1 weist unter anderem aufgrund der einfachen Hebelanordnung, bei diesem Ausführungsbeispiel bestehend aus dem U-förmigen Stellelement 12, einen einfachen Aufbau auf.

In Figur 3 ist eine erste Endposition des Stellarmes 17 an der Spindel 16 gezeigt, in welcher die Sicherheitslenksäule 1 einen großen Winkel zur fahrzeugfesten Konsole 9 aufweist. Demgegenüber ist in Figur 4 eine zweite Endposition des Stellarmes 17 auf der Spindel 16 gezeigt, in welcher die Lenkspindel 2 im Vergleich zu Figur 3 einen deutlich kleineren Winkel zur Konsole 9 einnimmt. Figur 5 zeigt eine Zwischenstellung zwischen der in Figur 3 eingenommenen ersten Endposition und der in Figur 4 eingenommenen zweiten Endposition der Sicherheitslenksäule 1. Über den ersten Stellantrieb 15, welcher beispielsweise einen Elektromotor aufweist, lässt sich somit eine Höhenverstellung der nicht gezeigten Lenkhandhabe erreichen.

Des Weiteren ist am äußeren Rohrteil 8 ein zweiter Stellantrieb 18 befestigt, der das obere Rohrteil 6 bezüglich des äußeren Rohrteils 8 axial verstellt. Eine erste mögliche Endposition einer Längsverstellung des oberen Rohrteils 6 ist dabei gemäß Figur 4 gezeigt, wogegen in Figur 5 eine der ersten möglichen Endposition entgegen gesetzte zweite Endposition dargestellt ist. Im Unterschied zu Figur 4 ist dabei gemäß Figur 5 das obere Rohrteil 6 derart verstellt, dass sich die Sicherheitslenksäule 1 im Vergleich zum in Figur 4 dargestellten Zustand verlängert. Ein Verstellmechanismus kann dabei in analoger Weise, beispielsweise über einen Spindelantrieb, zum ersten Stellantrieb 15 erfolgen. Der zweite Stellantrieb 18 ermöglicht so eine Längsverstellung der Sicherheitslenksäule 1 und dadurch eine Anpassung eines Lenkradabstandes von einem Fahrer sowie eine Anpassung an dessen physiologischen Erfordernisse. Dabei ist denkbar, dass der zweite Stellantrieb 18 über eine Schelle 19 (vgl. Figur 2) mit einem unteren Ende des oberen Rohrteils 6 verbunden ist und dieses fest umgreift.

In den Figur 1 bis 5 ist jeweils eine Komfortstellung der Sicherheitslenksäule 1 dargestellt, welche einen Normalzustand charakterisiert und ein problemloses Verstellen der Sicherheitslenksäule 1 hinsichtlich ihrer Länge und/oder Höhe ermöglicht.

Um im Crashfall ein Verletzungsrisiko des Fahrers, durch einen Aufprall desselben auf die Lenkhandhabe zu reduzieren, ist vorgesehen, dass die Sicherheitslenksäule 1 im Crashfall beziehungsweise beim Überschreiten von Missbrauchskräften in eine Crashstellung überführt werden kann, welche im Vergleich zur Komfortstellung eine deutliche axiale Verkürzung aufweist und dadurch die Lenkhandhabe aus dem unmittelbaren Gefahrenbereich in Richtung eines Armaturenbrettes herausbewegt.

Hierzu ist der Schlitten 11 so ausgebildet, dass er sich im Crashfall entlang seiner Schlittenführung derart bezüglich der fahrzeugfesten Konsole 9 verstellt, dass sich die Sicherheitslenksäule 1 durch Teleskopieren der einzelnen Rohrteile 6, 7, 8 verkürzt. Eine derart verkürzte Sicherheitslenksäule 1 ist gemäß Figur 6 gezeigt, aus der erkennbar ist, dass sowohl der erste Stellantrieb 15 als auch der zweite Stellantrieb 18 sowie das äußere Mantelrohr 8 als auch das obere Rohrteil 6 in Richtung des unteren Spindelteils 3 verschoben sind. Dabei ist vorteilhafterweise vorgesehen, dass ein Crashweg, das heißt eine Differenz der Längserstreckung der Sicherheitslenksäule 1 zwischen der Komfortstellung und der Crashstellung, zum Beispiel ca. 100 mm beträgt. Hierdurch kann gewährleistet werden, dass sich ein Verletzungsrisiko des Fahrers durch einen Aufprall auf die Lenkhandhabe vermeiden lässt oder zumindest reduziert.

Um in der Komfortstellung (Figur 1 bis Figur 5) eine möglichst vibrationsarme und steife Lagerung der Sicherheitslenksäule 1 zu gewährleisten, ist am äußeren Rohrteil 8 ein Druckstück 20 vorgesehen, welches das untere Rohrteil 7 radial gegen das obere Rohrteil 6 und somit unteres und oberes Rohrteil 7 und 6 radial gegen das äußere Rohrteil 8 andrückt. Dabei ist denkbar, dass das Druckstück 20 als Federpaket oder als geschraubtes Druckstück ausgebildet ist oder eine vergleichbare Anordnung aufweist, welche es erlaubt, das untere und das obere Rohrteil 7 und 6 radial gegen das äußere Rohrteil 8 zu drücken und dadurch spielfrei ineinander zu führen.

Zusammenfassend lassen sich die wesentlichen Merkmale der anhand der Figuren 1 bis 6 beschriebenen Sicherheitslenksäule 1 wie folgt charakterisieren: Die Erfindung sieht vor, bei einer Sicherheitslenksäule 1 neben einer teleskopierbaren Lenkspindel 2 ein aus insgesamt drei Teilen bestehendes teleskopierbares Mantelrohr 5 zu verwenden. Das Mantelrohr 5 besteht dabei aus einem unteren Rohrteil 7, welches um die erste Achse 10 schwenkbar an der fahrzeugfesten Konsole 9 gelagert ist und axial verstellbar im oberen Rohrteil 6 geführt ist. Das obere Rohrteil 6 hingegen ist axial verstellbar im äußeren Rohrteil 8 geführt, welches axial verstellbar an der Konsole 9 gelagert ist. Aufgrund dieser Ausgestaltung wird eine Sicherheitslenksäule 1 geschaffen, welche in einer Komfortstellung eine problemlose Höhen-und/oder Längsverstellung der Sicherheitslenksäule 1 ermöglicht und im Crashfall beziehungsweise beim Überschreiten von Missbrauchskräften in eine Crashstellung überführbar ist, bei der die Sicherheitslenksäule 1 hinsichtlich ihrer axialen Längserstreckung im Vergleich zur Komfortstellung deutlich verkürzt ist. Durch die drei ineinander teleskopierbaren Mantelrohrteile 6, 7 und 8, welche über ein Druckstück 20 spielfrei ineinander gelagert sind, kann zudem eine hohe Steifigkeit der Sicherheitslenksäule 1 und damit ein erhöhter Fahrkomfort erreicht werden. Somit wird sowohl die Komfortverstellung als auch die Crashverschiebung bei einem im Vergleich zu herkömmlichen Sicherheitslenksäulen deutlich geringeren Bauraum realisiert.

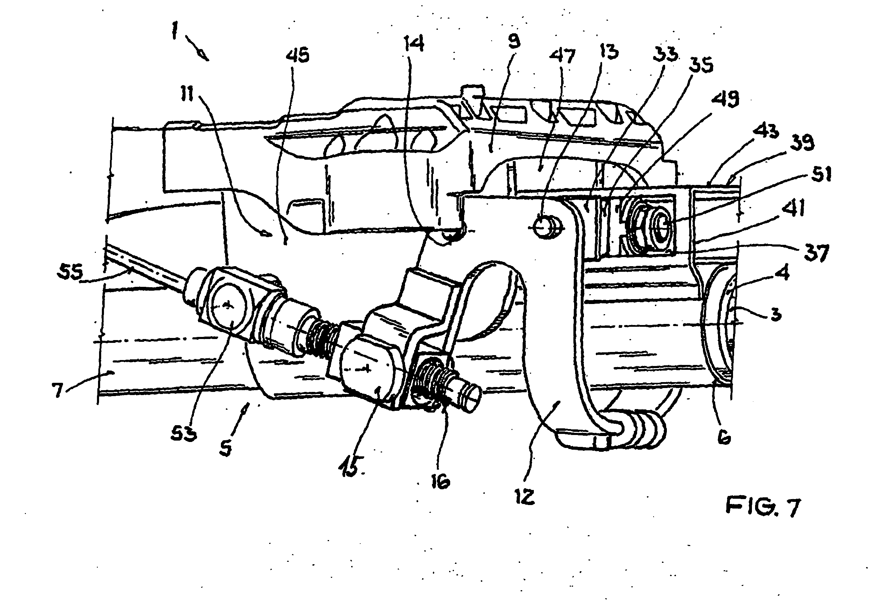

Figur 7 zeigt in perspektivischer Darstellung einen Ausschnitt eines zweiten Ausführungsbeispiels der Sicherheitslenksäule 1. Gleiche Teile sind mit gleichen Bezugszeichen versehen, so dass insofern zur Beschreibung der vorangegangenen Figuren verwiesen wird. Im Folgenden wird lediglich auf wichtige Unterschiede näher eingegangen.

Das Kraftübertragungselement 33, mittels dem das am Schlitten 11 um die zweite Achse 14 drehbar gelagerte Stellelement 12 mit dem Mantelrohr 5 gekoppelt ist, ist hier von einem Kulissenstein ähnlichen Führungselement 35 gebildet, welches am U-förmigen Stellelement 12 um die dritte Achse 13 drehbar gelagert und in einer schlitzförmigen Ausnehmung 37 einer Führung 39 mit nur geringem Spiel geführt ist. Die Ausnehmung 37 verläuft parallel zur Längsmittelachse der Sicherheitslenksäule 1.

Die Führung 39 ist bei diesem Ausführungsbeispiel auf der Außenseite des oberen Rohrteils 6 befestigt, so dass sie bei einer axialen Verschiebung des oberen Rohrteils 6 mittels des zweiten Stellantriebs 18 zum Zwecke der Längenverstellung der Sicherheitslenksäule ebenfalls in axialer Richtung der Lenksäule 1 mitbewegt wird. Die Führung 39 weist hier ein U-förmiges Profil auf, von dem in der Darstellung der Figur 7 lediglich einer der Schenkel 41 und eine die Schenkel miteinander verbindende Wand 43 erkennbar ist. Die Ausnehmung 39 befindet sich im Schenkel 41. Vorzugsweise weist auch der zweite, nicht erkennbare Schenkel eine Ausnehmung 37 auf, in der ein weiteres Kraftübertragungselement 33, wie es vorstehend beschrieben ist, axial geführt ist. Für die gewünschte Funktion der erfindungsgemäßen Verstellvorrichtung ist jedoch grundsätzlich ein Kraftübertragungselement 33 ausreichend. Im Folgenden wird davon ausgegangen, dass die Verstellvorrichtung hier zwei derartige Kraftübertragungselemente 33 umfasst.

Die Führung 39 greift zumindest in der in Figur 7 dargestellten Stellung der Sicherheitslenksäule 1 in den Freiraum zwischen die Schenkel 45 und 47 des hier zumindest im Wesentlichen U-förmigen Schlittens 11 ein. Zum Zwecke der Reduzierung von Vibrationen und Erhöhung der Steifigkeit der Sicherheitslenksäule 1 kann vorgesehen sein, den Schlitten 11 zum exakten Führen der Führung 39 zu nutzen. Hierzu ist ein entsprechend geringes Spiel zwischen den Schenkeln der Führung 39 und den Schenkeln 45, 47 des Schlittens 11 vorzusehen.

Wie aus Figur 7 ersichtlich, ist in dem Freiraum zwischen den in jeweils einer Ausnehmung 37 geführten Kraftübertragungselementen 33 ein lagefest mit dem oberen Rohrteil 6 und/oder der Führung 39 verbundener Lagerbock 49 für eine Spindel 51 des zweiten Stellantriebs 18 angeordnet. Der zweite Stellantrieb 18 kann beispielsweise einen an der Konsole angeordneten Elektromotor umfassen, der über eine flexible Antriebswelle die Spindel 51 antreibt. Durch eine Drehung der Spindel 51 erfolgt eine axiale Verschiebung des oberen Rohrteils 6, was zu einer Längenänderung der Sicherheitslenksäule 1 führt. Aufgrund der schlitzförmigen Ausnehmung 37 wird dabei praktisch keine Kraft auf das Kraftübertragungselement 33 übertragen.

In Figur 7 ist ferner die Spindel 16 des zur Höhenverstellung der Sicherheitslenksäule 1 dienenden ersten Stellantriebs 15 zu erkennen, die mittels eines Lagerbocks 53 direkt mit dem Stellelement 12 schwenkbar gekoppelt ist. Eine Drehung der Spindel 16 erfolgt mittels eines nicht dargestellten Elektromotors, der eine mit der Spindel 16 gekoppelte, flexible Antriebswelle 55 drehmomentbeaufschlagt. Je nach Drehrichtung der Spindel 16 wird dabei das Stellelement 12 um die zweite, konsolenfeste Achse 14 im oder entgegen dem Uhrzeigersinn verschwenkt, was aufgrund der Kopplung des Stellelements 12 über das mindestens eine Kraftübertragungselement 33 mit der am oberen Rohrteil 6 befestigten Führung 39 zu einem Verschwenken des Mantelrohrs 5 um die in Figur 7 nicht erkennbare erste Achse 10 führt. Beim Schwenken des Mantelrohrs um die Achse 10 findet eine Relativbewegung zwischen Kraftübertragungselement 33 und Mantelrohr 5 aufgrund der verschiedenen Bewegungsbahnen derselben statt, die durch die schlitzförmige Ausnehmung 37 möglich ist. Durch die Lageänderung des Kraftübertragungselements 33 innerhalb der Ausnehmung 37 verändert sich dabei auch die Position des Kraftangriffspunkts des Kraftübertragungselements, das heißt mit anderen Worten, die Lage der Anlagekontaktfläche des Kraftübertragungselement an der Führung in Bezug auf das Mantelrohr.

Die anhand der Figur 7 beschriebene Sicherheitslenksäule 1, deren Länge und Höhe motorisch, insbesondere elektromotorisch einstellbar ist, weist eine Höhenverstellvorrichtung mit einem besonders einfachen und raumsparenden sowie kostengünstig herstellbaren Aufbau auf, bei der zudem in einfacher und vorteilhafter Weise ein nur geringes Spiel zwischen den wenigen, einzelnen Bauteilen des Hebel-/Verstellmechanismus realisierbar ist. Hierzu muss im Besonderen lediglich ein entsprechend kleines Spiel zwischen den Kraftübertragungselementen 33 und der jeweiligen Ausnehmung 37 vorgesehen werden.

Aufgrund des nur geringen Spiels zwischen den einzelnen Komponenten der Längen- und Höhenverstellvorrichtung sind zusätzliche, manuelle Klemmmittel, um die Sicherheitslenksäule 1 in jeder gewünschten Position spielfrei zu fixieren, nicht erforderlich. Die Fixierung der Sicherheitslenksäule 1 erfolgt ausschließlich über die Kopplung der ersten und zweiten Stellantriebe 15 und 18 in der vorstehend beschriebenen Weise.

Die anhand der Figuren 1 bis 7 beschriebenen Ausführungsbeispiele der Sicherheitslenksäule 1 eignen sich gleichermaßen sowohl zur motorischen als auch manuellen Höhen- und Längenverstellung der Sicherheitslenksäule 1, so dass die Teilevielfalt reduziert ist. Beiden Ausführungsbeispielen der Sicherheitslenksäule 1 ist gemeinsam, dass eine Höhenverstellung der Sicherheitslenksäule 1 nicht zu einer Längenänderung derselben führt beziehungsweise eine Längenänderung erforderlich macht. Umgekehrt führt auch eine Längenänderung der Sicherheitslenksäule 1 nicht zu einer Höhenverstellung derselben. Das Kraftübertragungselement 33 wird also bei einer Längenänderung der Sicherheitslenksäule 1 nicht beziehungsweise nicht wesentlich kraftbeaufschlagt, was bei dem Ausführungsbeispiel gemäß der Figuren 1 bis 6 durch ein Hindurchführen des Mantelrohrs durch das Kraftübertragungselement und bei dem Ausführungsbeispiel gemäß Figur 7 durch die schlitzförmige Ausnehmung 37, in der das Kraftübertragungselement 33 geführt ist, realisiert ist.

## Patentansprüche

1. Sicherheitslenksäule (1) für ein Kraftfahrzeug, insbesondere für einen Personenkraftwagen, mit
- einer teleskopierbaren Lenkspindel (2), die ein lenkradnahes oberes Spindelteil (3) und ein lenkradfernes unteres Spindelteil (4) aufweist und in einem Mantelrohr (5) drehbar gelagert ist,
- wobei das Mantelrohr (5) teleskopierbar ausgestaltet ist und ein lenkradnahes oberes Rohrteil (6) und ein lenkradfernes unteres Rohrteil (7) aufweist, und wobei das untere Rohrteil (7) um eine erste Achse (10) schwenkbar an einer fahrzeugfest anordenbaren Konsole (9) gelagert ist,
- und mit einer zur Höhenverstellung der Sicherheitslenksäule (1) dienenden, ein an der Konsole (9) um eine zweite Achse (14) schwenkbar gelagertes Stellelement (12) aufweisenden Verstellvorrichtung, **dadurch gekennzeichnet,**
**dass** das Stellelement (12) über ein in axialer Richtung relativ gegenüber dem Mantelrohr (5) translatorisch verstellbares Kraftübertragungselement (33) mit dem Mantelrohr (5) gekoppelt ist.

2. Sicherheitslenksäule nach Anspruch 1,
**dadurch gekennzeichnet,**
**dass** das Kraftübertragungselement (33) in einer außen am Mantelrohr (5) vorgesehenen Führung geführt ist.

3. Sicherheitslenksäule nach Anspruch 1 oder 2,
**dadurch gekennzeichnet,**
**dass** das Kraftübertragungselement (33) am Stellelement (12) um eine dritte Achse (13) drehbar gelagert ist.

4. Sicherheitslenksäule nach einem der Ansprüche 1 bis 3,
**dadurch gekennzeichnet,**
**dass** das Stellelement (12) über einen Schlitten (11) an der Konsole (9) gelagert ist.

5. Sicherheitslenksäule nach einem der Ansprüche 1 bis 4,
**dadurch gekennzeichnet,**
**dass** ein erster Stellantrieb (15) zum Verschwenken des Stellelements (12) um die erste Achse (10) und/oder ein zweiter Stellantrieb (18) zur Längenverstellung der Sicherheitslenksäule (1) vorgesehen ist.

6. Sicherheitslenksäule nach Anspruch 1,
**dadurch gekennzeichnet,**
**dass** das Kraftübertragungselement (33) von einem äußeren Rohrteil (8) gebildet ist, in dem das das obere Rohrteil (6) axial verstellbar geführt ist.

7. Sicherheitslenksäule nach Anspruch 6,
**dadurch gekennzeichnet,**
**dass** das äußere Rohrteil (8) über einen Schlitten (11) an der Konsole (9) gelagert ist, und dass zwischen dem äußeren Rohrteil (8) und dem Schlitten (11) das Stellelement (12) angeordnet ist, welches am Schlitten (11) um eine zweite Achse (14) und am äußeren Rohrteil (8) um eine dritte Achse (13) drehbar gelagert ist.

8. Sicherheitslenksäule nach einem der Ansprüche 1 bis 7,
**dadurch gekennzeichnet,**
**dass** die erste Achse (10), die zweite Achse (14) und die dritte Achse (13) parallel zueinander verlaufen.

9. Sicherheitslenksäule nach einem der Ansprüche 1 bis 8,
**dadurch gekennzeichnet,**
**dass** das Stellelement (12) U-förmig ausgebildet ist oder einen U-förmigen Bereich aufweist, und dass das Mantelrohr (5) zwischen den Schenkeln des U-Profils angeordnet ist.

10. Sicherheitslenksäule nach Anspruch 9,
**dadurch gekennzeichnet,**
**dass** beide Schenkel des U-förmigen Stellelements (12) einen L-förmig abgewinkelten Endbereich aufweisen, wobei die zweite Achse (14) und die dritte Achse (13) beide L-förmige Endbereiche durchdringen.

11. Sicherheitslenksäule nach einem der Ansprüche 6 bis 10,
**dadurch gekennzeichnet,**
**dass** am Schlitten (11) ein erster Stellantrieb (15) befestigt ist, der über eine Spindel (16) einen am Stellelement (12) drehfest angeordneten Stellarm (17) verstellt und **dadurch** die Sicherheitslenksäule (1) bezüglich der ersten Achse (10) verdreht.

12. Sicherheitslenksäule nach einem der Ansprüche 6 bis 11,
**dadurch gekennzeichnet,**
**dass** am äußeren Rohrteil (8) ein zweiter Stellantrieb (18) befestigt ist, der das obere Rohrteil (6) bezüglich des äußeren Rohrteils (8) axial verstellt.

13. Sicherheitslenksäule nach Anspruch 12,
**dadurch gekennzeichnet,**
**dass** der zweite Stellantrieb (18) über eine Schelle (19) mit einem unteren Ende des oberen Rohrteils (6) verbunden ist und dieses umgreift.

14. Sicherheitslenksäule nach einem der Ansprüche 5 und 11 bis 13,
**dadurch gekennzeichnet,**
**dass** der erste Stellantrieb (15) und/oder der zweite Stellantrieb (18) einen Elektromotor aufweisen.

15. Sicherheitslenksäule nach einem der Ansprüche 1 bis 14,
**dadurch gekennzeichnet,**
**dass** der Schlitten (11) so ausgebildet ist, dass er sich im Crashfall entlang seiner Schlittenführung derart bezüglich der Konsole (9) verstellt, dass sich die Sicherheitslenksäule (1) durch teleskopieren der Rohrteile (6,7,8) verkürzt.

16. Sicherheitslenksäule nach einem der Ansprüche 6 bis 15,
**dadurch gekennzeichnet,**
**dass** am äußeren Rohrteil (8) ein Druckstück (20) vorgesehen ist, welches das untere Rohrteil (7) radial gegen das obere Rohrteil (6) und somit unteres (7) und oberes Rohrteil (6) radial gegen das äußere Rohrteil (8) andrückt.

## Claims

1. Safety steering column (1) for a motor vehicle, in particular for a passenger car, with
- a telescopic steering shaft (2) comprising an upper shaft portion (3) near the steering and a lower shaft portion (3) remote from the steering wheel, and which is fitted to rotate within a steering column tube (5),
- the steering column tube (5) being and comprising an upper tube portion (6) near the steering wheel and a lower tube portion (7) remote from the heel, and such that the said lower tube portion (7) is mounted to pivot about a first axis (10), on a bracket (9) that can be arrange fixed to the vehicle,
- and with an adjustment device comprising a positioning element (12) mounted on the said bracket (9) to pivot about a second axis (14), which is used for adjusting the or the safety steering column (1),
**characterised in that**
the positioning element (12) is coupled to the steering column tube (5) by means of a force transfer element (33) that can be adjusted by translation in the direction relative to the steering column tube (5).

2. Safety steering column according to Claim 1,
**characterised in that**
the force transfer element (33) is glided in a guide provided on the outside of the steering column tube (5).

3. Safety steering column according to Claims 1 or 2,
**characterised in that**
the force transfer element (33) is mounted to rotate on the positioning element (12) about a third axis (13).

4. Safety steering column according to any of Claims 1 to 3,
**characterised in that**
the positioning element (12) is mounted on the bracket (9) by means of a sliding support (11).

5. Safety steering column according to any of Claims 1 to 4,
**characterised in that**
a first positioning drive (15) is provided for pivoting the positioning element (12) about the first axis (10) and/or a second positioning drive (18) is provided for adjusting the length of the safety steering column (1).

6. Safety steering column according to Claim 1,
**characterised in that**
the force transfer element (33) is formed of an outer tube portion (8) in which the upper tube portion (6) is guided and can be adjusted axially.

7. Safety steering column according to Claim 6,
**characterised in that**
the outer tube portion (8) is mounted on the bracket (9) mean of a sliding support (11), and between the outer tube portion (8) and the sliding support (11) is arranged the positioning element (12), which is mounted to rotate on the sliding support (11) about a second axis (14) and on the outer tube portion (8) about a third axis (13).

8. Safety steering column according to any of Claims 1 to 7,
**characterised in that**
the first axis (10), the second axis (14) and the third axis (13) run parallel to one another.

9. Safety steering column according to any of Claims 1 to 8,
**characterised in that**
the element (12) is U-shaped or has a U-shaped part, and the steering column tube (5) is arranged between the arms of the U-section,

10. Safety steering column according to Claims 9,
**characterised in that**
the two arms of the U-shaped positioning element (12) have an end area angled in an L-shape, such that the second axis (14) and the third axis (13) pass through the two L-staped end areas.

11. Safety steering column according to any of Claims 6 to 10,
it that
a first positioning drive (15) is attached to the sliding support (11), which, by means of a spindle (16), moves a positioning arm (17) arranged rotationally immovably on the positioning element (12) and thereby rotates the safety steering column relative to the first axis (10).

12. Safety steering column according to or Claims 6 to 11,
**characterised in that**
a second positioning drive (18), which adjusts the upper tube portion (6) relative to the outer tube portion its attached to the outer tube portion (8).

13. Safety steering column according to Claim 12,
**characterised in that**
the second positioning drive (18) is connected by means of a clamp (19) to a lower end of the upper tube portion (8) and embraces it.

14. Safety steering column according to any of Claims 5 and 11 to 13,
**characterised in that**
the first positioning drive (15) and/or the second positioning drive (18) comprise(s) an electric motor.

15. Safety steering column according to any of Claims 1 to 14,
**characterised in that**
the sliding support (11) is designed such that in the event of a crash it moves along its sliding support guide relative to the bracket (9) in such manger that the safety steering column (1) is shortened bey a telescopic action of the tube portions (6, 7, 8).

16. Safety steering column according to many of Claims 6 to 15,
in that
a pressure element (20) is provide on the outer tube portion (8), which presses the lower tube portion (7) radically against the upper tube portion (6) and thus also the slower (7) and upper (6) tube portions radially against the outer tube portion (8).

## Revendications

1. Colonne (1) de dilection de sécurité pour un véhicule automobile, en particulier pour une voiture de touriste, avec
- un arbre (2) de direction télescopique, qui présente une partie (3) d'arbre supérieure proximale du volant de direction et une partie (4) d'arbre inférieure du volant de direction et qui est monté à rotation dans un tube (5) de protection,
- le tube (5) de projection était conçu de manière à être télescopique et un élément (6) tubulaire supérieur proximal du volant de direction et un élément (7) tubulaire inférieur distal du volant de direction, et l'élément (7) tubulaire inférieur est monte sur une consol (9) qui peut être fixée au véhicule de manière fixe, de sorte à ce qu'il puisse tourner autour d'un premier axe (10),
- et avec un dispositif de réglage servant au réglage de la hauteur de la colonne (1) de direction de sécurité, présentant un élément (12) d'actionnement monté sur la console de manière à pouvoir pivoter autour d'un deuxième axe (14), **caractérisée en ce que**,
l'élément (12) d'actionnement est couplé avec le tube (5) de protection par un élément (33) de transmission réglable de manière translationnelle dans une direction axiale par rapport au tube (5) de protection.

2. Colonne de direction de sécurité selon la revendication 1,
**caractérisé en ce que**
l'élément (33) de transmission est guidé dans un élément de guidage prévu à sur le tube (5) de protection.

3. Colonne de direction de sécurité selon la revendication 1 ou 2,
**caractérisée en ce que**
l'élément (33) de transmission est monté à rotation sur l'élément (12) d'actionnement de sorts à pivoter autour d'un troisième axe (13).

4. colonne de direction de sécurité selon l'une quelconque des revendications 1 à 3,
**caractérisée en ce que**
l'élément (12) d'actionnement est monté sur la console (9) par un coulisseau (11).

5. Colonne de direction de sécurité selon l'une quelconque des revendications 1 à 4,
**caractérisée en ce qu'**
un premier mécanisé (15) d'entraînement est prévu pour faire pivoter l'élément (12) d'actionnement autour du premier axe (10) et/ou un second mécanisme (18) d'entraînement est prévu pour déplacer longitudinalement la colonne (1) de direction de sécurité.

6. Colonne de direction de sécurité selon la revendication 1,
**caractérisée en ce que**
l'élément (33) de transmission est formé d'un élément (8) tubulaire extérieur, dans lequel l'élément (6) tubulaire supérieur est guidé de telle sorte à être réglable axialement,

7. Colonne de direction de sécurité selon la revendication 6,
**caractérisé en ce que**
l'élément (8) tubulaire extérieur est monté sur la console (9) par un coulisseau (11), et qu'entre l'élément (8) tubulaire extérieur et le coulisseau (11) est disposé l'élément (12) d'actionnement, lequel est monté à rotation sur le coulisseau (11) de sorte à pivoter autour d'un deuxième axe (14) et sur l'élément (8) tubulaire extérieur de sorte à pivoter autour d'un troisième axe (13)

8. Colonne de direction de sécurisé selon l'une quelconque des revendication 1 à 7,
**caractérisés en ce que**
le premier axe (10), le deuxième axe (14) et le troisième axe (13) sont parallèles les uns par rapport aux autres.

9. Colonne de direction de sécurisé selon l'une quelconque des revendications 1 à 8,
**caractérisé en ce que**
l'élément (12) d'actionnement est en forme de U ou présente une région en forme de U, et **en ce que** le tube (5) de projection est disposé entre les branches du profilé en U.

10. Colonne de direction de sécurité selon la revendication 9.
**caractérisée en ce que**
les deux branches de l'élément (12) d'actionnement en forme de U présentant une région d'extrémité pliée en L, le deuxième axe (14) et le troisième axe (13) pénètrent dans les deux régions d'extrémité en forme de L.

11. Colonne de direction de sécurisé selon l'une quelconque des revendications 6 à 10,
**caractérisée en ce que**
sur le coulisseau (11) est fixé un premier mécanisme (15) d'entraînement, quai par une broche (16) déplace un bras (17) de réglage monté en rotation sur l'élément (12) d'actionnement et de cette manière fait tourner la cotonne (1) de direction de sécurité par rapport au premier axe (10).

12. Colonne de direction de sécurité selon l'une quelconque des revendication 6 à 11,
**caractérisée en ce que**
sur l'élément (8) tubulaire extérieur est fixé un second mécanisme (18) d'entraînement qui déplace axialement l'élément (6) tubulaire supérieur par rapport à l'élément (8) tubulaire extérieur.

13. Colonne de direction de sécurité selon la revendication 12,
**caractérisée en ce que**
le second mécanisme (18) d'entraînement est relié à une extrémité inférieure de l'élément (6) tubulaire supérieur par un collier (19) de et entoure celui-ci.

14. Colonne de direction de sécurisé selon l'une quelconque des revendications 5 et 11 à 13,
**caractérisée en ce que**,
le premier mécanisme (15) d'entraînement et/ou le secondé mécanisme (18) d'entraînement présentent un moteur électrique.

15. Colonne de direction de sécurité selon l'une quelconque des revendications 1 à 14, **caractérisée en ce que**,
le coulisseau (11) est configure de telle sorte qu'en cas d'accident il se déplace le long de soin guide de coulisseau par rapport à la console (9) de telle manière que la colonne (1) de direction de sécurisé se raccourcir par le télescopage des éléments tubulaires (6, 7, 8).

16. Colonne de direction de sécurité selon l'une quelconque des revendications 6 à 15, **caractérisée en ce que,**
sur l'élément (8) tubulaire extérieur est prévu un élément (20) de pression, lequel serre radialement l'élément (7) tubulaire inférieur contre l'élément (6) tubulaire supérieur, et par conséquent l'élément (7) tubulaire intérieur et supérieur (6) radialement contre l'élément (8) tubulaire extérieur.
